# EUROPEAN PATENT APPLICATION

(11) **EP 4 496 137 A1**
(43) Date of publication of application: **22.01.2025**
(21) Application number: 23769760.2
(22) Date of filing: 14.03.2023
(51) Int. Cl.: H01R 13/52, H01R 13/6581, H01R 13/73, H01R 13/405, H01B 7/00, H01B 7/04, H01B 7/18, H01B 7/40, B60L 53/16, B60L 53/18

(54) **CONNECTOR ASSEMBLY, CHARGING SOCKET AND VEHICLE**

(30) Priority: 14.03.2022 CN 202210250034
(71) Applicant: Jilin Zhong Ying High Technology Co., Ltd., Jilin 130028 (CN)
(72) Inventor: WANG, Chao, Changchun, Jilin 130028 (CN)
(74) Representative: Habermann, Hruschka & Schnabel
(86) International application number: PCT/CN2023/081321
(87) International publication number: WO 2023/174258

(57) **Abstract**

The present disclosure discloses a connector assembly, a charging socket and a vehicle, including a plug-in portion, a support portion, a connection terminal and an electrical connection framework, in which the plug-in portion is connected to the support portion, and the electrical connection framework is electrically connected to the connection terminal; the plug-in portion is provided therein with a plug-in cavity, and the connection terminal is at least partially located in the plug-in cavity; the support portion is provided therein with a supporting cavity, and connection portions of the electrical connection framework and the connection terminal are located in the supporting cavity; at least a sealing portion is further arranged in the supporting cavity, and the sealing portion seals the supporting cavity. With the connector assembly of the present disclosure, the support portion is wrapped to achieve waterproof sealing of a connection area between the electrical connection framework and a protection shell, in addition, the protection shell is disposed so that the support portion can be a hollow structure, which reduces volume of the support portion, reduces the weight of the support portion, so that the overall weight of the connector assembly can be reduced, and a sealing ring on the electrical connection framework is disposed on the electrical connection framework, increasing sealing with the protection shell.

## Description

### RELATED APPLICATION

The present disclosure claims priority of the Chinese invention patent disclosure with the disclosure number 202210250034.0, filed on March 14, 2022, and entitled "CONNECTOR ASSEMBLY, CHARGING SOCKET AND VEHICLE", which is hereby incorporated by reference in its entirety.

### TECHNICAL FIELD

This disclosure relates to the technical field of new energy vehicles, in particular to a connector assembly, a charging socket and a vehicle.

### BACKGROUND

New energy vehicles have been continuously developed because of their low-carbon and environmental protection characteristics, and connector products of the new energy vehicles accordingly have become very popular. At present, connectors on the market can basically meet different power transmission needs of the new energy vehicles, but still have some shortcomings.

The existing connectors are generally formed by being shaped at first and then spliced with other parts, and the overall waterproof sealing is poor. In addition, some connector products adopt the form of elastic material injection molding, can achieve waterproof, however, elastic material filling causes the entire product to be heavy in weight, not easy to use, and also difficult to repair and maintain, thus the product can only be scrapped as a whole. That is to say, there is currently a lack of a connector assembly on the market that has good waterproof sealing performance and is as lightweight as possible. Therefore, there is an urgent need for a new solution in the existing technology to solve the above problems.

### SUMMARY OF THE INVENTION

Embodiments of the present disclosure provide a connector assembly to solve the problem that the existing connector assembly fails to take into account both waterproof tightness and weight.

The connector assembly of the present disclosure includes a plug-in portion, a support portion, a connection terminal and an electrical connection framework, in which the plug-in portion is connected to the support portion, and the electrical connection framework is electrically connected to the connection terminal; the plug-in portion is provided therein with a plug-in cavity, and the connection terminal is at least partially located in the plug-in cavity; the support portion is provided therein with a supporting cavity, and connection portions of the electrical connection framework and the connection terminal are located in the supporting cavity; at least a sealing portion is further arranged in the supporting cavity, and the sealing portion seals the supporting cavity.

The present disclosure further provides a charging socket including the connector assembly described above.

The present disclosure further provides a vehicle including the connector assembly as described above.

The advantageous effects of the present disclosure are as follows.

1. The support portion is wrapped to achieve waterproof sealing of a connection area between the electrical connection framework and a protection shell, in addition, the protection shell is disposed so that the support portion can be a hollow structure, which reduces volume of the support portion, reduces the weight of the support portion, so that the overall weight of the connector assembly can be reduced, and a sealing ring on the electrical connection framework is disposed on the electrical connection framework, increasing sealing with the protection shell.

2. The problem that automatic production and assembly cannot be realized due to the use of flexible cables for the current electrical wiring harnesses is solved, and the use of at least partially hard electrical connection framework can achieve the automatic fabrication and assembly of wiring harness.

3. The problem that contact friction between the flexible cable and a vehicle shell causes an insulation layer to be damaged and short circuit is solved, the electrical connection framework can be arranged along with the shape of the vehicle body, but can also be arranged at a certain distance from the vehicle body, which can ensure that the electrical connection framework does not have friction with the vehicle shell, so as to ensure the service life of the electrical connection framework.

4. The support portion or the sealing portion is made of conductive material and is electrically connected to a shielding layer, which can effectively prevent electromagnetic interference generated by the connector terminal, conductive plastics can be formed integrally with the connector by one injection molding, thereby saving processing time, improving production efficiency, and reducing production cost.

5. The electrical connection framework is further provided with a flexible portion and a bending portion, and according to the installation environment of the vehicle body, the structure of the connector assembly can be reasonably designed, so that the connector assembly can be installed on the vehicle body more easily, thereby saving the assembly time. Other features and advantages of the present disclosure will become clear from the following detailed description of exemplary embodiments of the present disclosure with reference to the accompanying drawings.

### BRIEF DESCRIPTION OF THE DRAWINGS

The accompanying drawings incorporated in and forming part of the specification show embodiments of the present disclosure and, together with description thereof, are used to explain the principle of the present disclosure.
FIG. 1 is a structural schematic of a first embodiment of the connector assembly in the present disclosure;
FIG. 2 is a structural schematic of a second embodiment of the connector assembly in the present disclosure;
FIG. 3 is a structural schematic of a third embodiment of the connector assembly in the present disclosure;
FIG. 4 is a structural schematic of a fourth embodiment of the connector assembly in the present disclosure;
FIG. 5 is a structural schematic of a fifth embodiment of the connector assembly in the present disclosure;
FIG. 6 is a structural schematic of a sixth embodiment of the connector assembly in the present disclosure;
FIG. 7 is a structural schematic of a seventh embodiment of the connector assembly in the present disclosure;
FIG. 8 is a structural schematic of an eighth embodiment of the connector assembly in the present disclosure;
FIG. 9 is a structural schematic of a ninth embodiment of the connector assembly in the present disclosure;
Figure 10 is a structural schematic of the connector assembly with a cavity in the present disclosure;
FIG. 11 is a schematic cross-sectional view of the connector assembly with a cavity in the present disclosure.

### Description of the reference numerals:

1. plug-in portion; 11. plug-in cavity; 12. first end; 13. first through hole; 2. support portion; 21. second end; 22. second through hole; 23. third end; 24. third through hole; 3. connection terminal; 4. electrical connection framework; 41. insulation layer; 42. cavity; 5. sealing portion; 51. installation cavity; 6. shielding layer; 7. protection shell; 8. sheath layer.

### DETAILED DESCRIPTION

Hereinafter the technical solution in the embodiments of the present disclosure will be described clearly and integrally in combination with the accompanying drawings in the embodiments of the present disclosure, and obviously the described embodiments are merely part of the embodiments, not all of the embodiments. Any other embodiment obtained by those skilled in the art based on the embodiments of the present disclosure without paying any creative labor fall within the protection scope of the present disclosure.

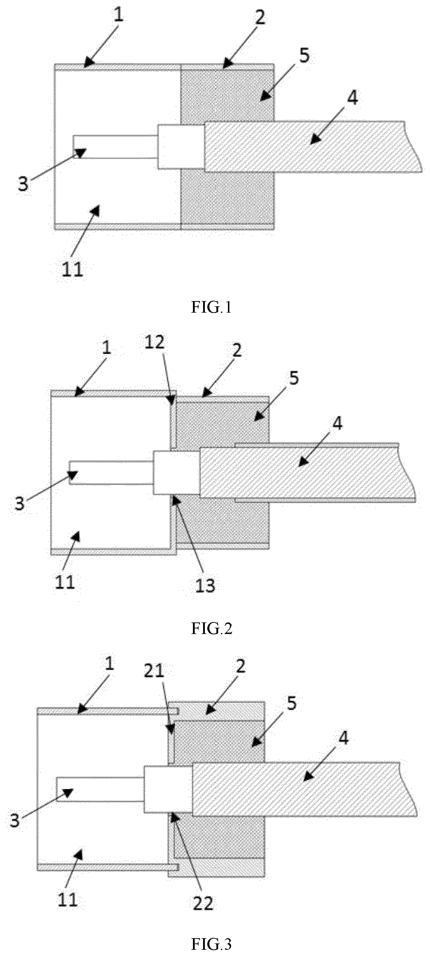

Embodiments of the present disclosure provide a connector assembly which not only has waterproof sealing performance but also makes the overall weight of the product as light as possible. As shown in FIGs. 1 to 9, the connector assembly provided by the embodiment of the present disclosure includes a plug-in portion 1, a support portion 2, a connection terminal 3 and an electrical connection framework 4, in which the plug-in portion 1 is connected to the support portion 2, and the electrical connection framework 4 is electrically connected to the connection terminal 3; the plug-in portion 1 is provided therein with a plug-in cavity 11, and the connection terminal 3 is at least partially located in the plug-in cavity 11; the support portion 2 is provided therein with a supporting cavity, and connection portions of the electrical connection framework 4 and the connection terminal 3 are located in the supporting cavity; at least a sealing portion 5 is further arranged in the supporting cavity, and the sealing portion 5 seals the supporting cavity.

This embodiment can achieve waterproof sealing of a connection area between the electrical connection framework 4 and the connection terminal 3. In addition, the supporting cavity structure inside the support portion 2 reduces the weight of the support portion 2, so that the overall weight of the connector assembly is reduced, which meets the waterproof sealing requirements of the connector assembly and at the same time avoids heavy weight of the entire connector assembly.

In addition, the support portion 2 is disposed so as to realize the waterproof sealing of the connector assembly, which enhances safety performance of the automotive electrical connection. In addition, there is no need to cooperate with other components, making the structure achieving waterproof sealing of the connector assembly be relatively simple, which can greatly reduce the cost of the connector assembly, and is conducive to the promotion of the connector assembly and even electric vehicles.

In some embodiments, the support portion 2 and the sealing portion 5 are formed integrally by processes such as injection molding, extrusion, blow molding or foaming, which can reduce processing time and improve production efficiency.

In some embodiments, the support portion 2 and the plug-in portion 1 are formed integrally by processes such as injection molding, extrusion molding, blow molding or foaming, which can reduce processing time and improve production efficiency.

The injection molding process refers to the process of making a semi-finished part of a certain shape by pressurizing, injecting, cooling and disconnecting the molten raw materials.

Extrusion molding is an efficient, continuous, low-cost molding processing method, and is a technology that appears earlier in the processing of polymer materials. Extrusion forming is a forming processing method in the polymer processing field which has the most production varieties, the most changes, high productivity, strong adaptability, wide use, and the largest proportion of yield.

The dipping process refers to the process of electrically heating the workpiece to reach a certain temperature, and then dipping the workpiece into the dipping liquid to solidify the dipping liquid on the workpiece.

The blow molding process refers to using an extruder to extrude a tubular blank, putting the tubular blank in the mold while it's still hot, blowing compressed air into the mold to blow up the tubular blank to reach the mold cavity shape, and getting a product after cooling and shaping the tubular blank. The blow molding process has the advantages that it is suitable for a variety of plastics, can produce large products, can realize high production efficiency, uniform blank temperature and less equipment investment.

The foaming process refers to that in the foam forming process or the foamed polymer material, the honeycomb or porous structure is formed through the addition and reaction of physical blowing agent or chemical blowing agent. The basic steps of foam forming include forming a foam core, growing or expanding the foam core, and stabilizing the foam core. Under the given temperature and pressure conditions, the solubility of the gas decreases, so as to reach the saturation state, so that the excess gas is expelled and bubbles form, thus achieving nucleus formation.

In some embodiments, the wall thickness of the support portion 2 is inconsistent with the wall thickness of the plug-in portion 1. Different areas in the vehicle have different vibrations, and have different levels of protection of the connector assembly. Depending on different mechanical protections and anti-breakdown protections, the support portion 2 and the plug-in portion 1 are disposed to have different thicknesses, to reduce the volume and reduce the weight.

In some embodiments, part of the electrical connection framework 4 is flexible, and the flexible electrical connection framework 4 can ensure that the electrical connection framework 4 can be bent by a large angle, so as to be conveniently disposed in the vehicle body with a large corner.

In some embodiments, the electrical connection framework 4 includes at least one bending portion to meet the need to install the electrical connection framework 4 in the vehicle body.

In some embodiments, the electrical connection framework has a cross section in the shape of one or several of circular, oval, rectangular, polygonal, A-shaped, B-shaped, D-shaped, M-shaped, N-shaped, O-shaped, P-shaped, S-shaped, E-shaped, F-shaped, H-shaped, K-shaped, L-shaped, T-shaped, U-shaped, V-shaped, W-shaped, X-shaped, Y-shaped, Z-shaped, semi-arc, arc, and waved shape. Electrical connection frameworks 4 with cross sections of different shapes can be selected according to the actual needs.

In some embodiments, the cross-section shape of the electrical connection framework 4 is polygon, and the corners of the polygon are all chamfered or rounded. When the cross section of the electrical connection framework 4 has edges and corners, the edges and corners can be rounded or chamfered to prevent the sharp portions thereof from causing damage to the insulation layer 41.

In some embodiments, the electrical connection framework 4 has a cross-sectional area of 3.5 mm2 to 240 mm2. The cross-sectional area of the electrical connection framework 4 determines the current that the electrical connection framework 4 can conduct. Under normal circumstances, the electrical connection framework 4 that achieves signal conduction has a small current and a small cross-sectional area. For example, the smallest cross-sectional area of the electrical connection framework 4 for transmitting signals can reach 3.5 mm2. The electrical connection framework 4 that achieves power conduction has a large current and a large cross-sectional area. For example, a car battery harness has a largest cross-sectional area of the conductor of 240 mm2.

In some embodiments, the material of the connection terminal 3 contains copper or copper alloy, the material of the electrical connection framework contains aluminum or aluminum alloy, and the electrical connection framework 4 is electrically connected to the connection terminal 3 by welding or crimping. The electrical connection framework 4 made of aluminum or aluminum alloy has the advantages of good rigidity, light weight and high transmission efficiency, especially suitable for the transmission of large current. The material of the connection terminal 3 contains copper or copper alloy, the material of the electrical connection framework 4 contains aluminum or aluminum alloy. Copper or copper alloy has high electrical conductivity and is resistant to friction, and at present, the connection part of most electrical devices is made of copper, thus it is necessary to use the connection terminal 3 whose material contains copper or copper alloy for plugging and unplugging connection. The connection terminal 3 can be widely used in various electrical transmission scenarios. The electrical connection framework 4 made of aluminum or aluminum alloy has the advantages of good rigidity, light weight and high transmission efficiency, especially suitable for the transmission of large current. The connection terminal 3 and the electrical connection framework 4 are connected by welding. The welding methods adopted include one or several of resistance welding, friction welding, ultrasonic welding, arc welding, laser welding, electron beam welding, pressure diffusion welding and magnetic induction welding. The concentrated heat energy or pressure is used to create a fused connection between the connection terminal 3 and the electrical connection framework 4, to produce stable connection by the welding.

In addition, the metal inertia of copper is greater than that of aluminum, the electrode potential difference between copper and aluminum is 1.9997 V, and an electrochemical reaction occurs after the two metals are connected by electricity, causing the aluminum wire to be oxidized gradually, and reducing the mechanical strength and conductivity of the aluminum wire. The use of welding can achieve connection of dissimilar materials, and has better conductive effect due to contact position fusion.

The resistance welding refers to a method of welding by strong current passing through the contact point between the electrode and the workpiece to generate heat from the contact resistance.

The friction welding refers to a method of welding by using the heat generated by the friction of the workpiece contact surface as the heat source to make the workpiece produce plastic deformation under the action of pressure.

The ultrasonic welding refers to that high-frequency vibration wave is transmitted to the surfaces of two objects to be welded, and under pressurization, the surfaces of two objects rub against each other to form a fusion between molecular layers.

The arc welding refers to that electric arc is taken as the heat source and the physical phenomenon of atmospherical discharges is utilized to convert electrical energy into thermal and mechanical energy required for welding, so as to achieve the purpose of connecting metal, and the main methods include welding electrode arc welding, submerged arc welding, gas shielded welding and so on.

The laser welding method refers to an efficient and precise welding method using a laser beam with high energy density as a heat source.

The friction welding method refers to a method of welding by using the heat generated by the friction of the workpiece contact surface as the heat source to make the workpiece produce plastic deformation under the action of pressure.

The electron beam welding method refers to the use of accelerated and focused electron beam to bombard the welding surface placed in vacuum or non-vacuum, so that the welded workpiece is melted to achieve welding.

The pressure welding method is a method of applying pressure to a weldment to make the binding surface be in contact closely to produce a certain plastic deformation and complete the welding.

The magnetic induction welding refers to that instantaneous high-speed collision occurs between two workpieces to be welded under the action of strong pulsed magnetic field, and when surface of the material is subjected to high pressure waves, the atoms of the two materials meet in the interatomic distance, thus forming a stable metallurgical bond at the interface, which is a type of solid-state cold welding that can weld together conductive metals with similar or dissimilar properties.

The crimping refers to the production process that after the electrical connection framework 4 and the connection terminal 3 are assembled, the two are stamped into one using a crimping machine. The advantage of crimping is mass production, and a large amount of products with stable quality can be produced quickly by using an automatic crimping machine.

In some embodiments, the electrical connection framework 4 is a rigid body and the tensile strength of the electrical connection framework 4 is greater than 75 MPa. The rigid body refers to an object whose shape and size do not change in motion and after the force is applied thereto, and the relative position of the internal points does not change. Absolutely rigid body does not actually exist, but is only an ideal model, because any object is more or less deformed after the force is applied thereto, and if the degree of deformation is extremely small relative to the geometric size of the object itself, and the deformation can be ignored when studying the movement of the object. Therefore, in the process of use of the electrical connection framework 4 made of rigid body material, the deformation generated is negligible and can be ignored, and the greater the tensile strength of the rigid body is, the less the deformation is.

In order to verify the influence on the torque at the time of bending of the electrical connection framework 4 and whether abnormal sound occurs in the vibration process, caused by the tensile strength of the electrical connection framework 4, the inventor selects a sample of the electrical connection framework 4 with the same size specification and using different tensile strengths to test the torque at the time of bending of the electrical connection framework 4 and the abnormal sound in the vibration process.

The tensile value of the electrical connection framework 4 is tested by using a universal tension testing machine to fix the two ends of the electrical connection framework 4 on a tensile fixture of the universal tension testing machine, and to stretch the sample at a speed of 50 mm/min and record the tensile value at the time of being pulled broken. In this embodiment, the tensile value greater than 1600 N is a qualified value.

The torque of the electrical connection framework 4 is tested by using a torque tester to test the torque value by which the electrical connection framework 4 is deformed during bending when the electrical connection framework 4 is bent at 90° at the same radius and at the same speed, and in this embodiment, a torque value less than 60 N•m is a qualified value.

Whether the electrical connection framework 4 produces abnormal sound is tested by selecting a sample of the electrical connection framework 4 with the same size specification and using different tensile strengths, assembling the connectors of the same specification together and fixing them on a vibration test bench, and observing whether the electrical connection framework 4 produces abnormal sound in the vibration test process.

**Table 1: Influence of different tensile strengths on the torque value and abnormal sound of the electrical connection framework 4**

| Different tensile strengths (MPa) | | | | | | | | | | | |
|---|---|---|---|---|---|---|---|---|---|---|---|
| 60 | 75 | 100 | 130 | 180 | 230 | 280 | 330 | 380 | 430 | 480 | 500 |

| The tension value (N) when the electrical connection framework 4 is pulled broken | | | | | | | | | | | |
|---|---|---|---|---|---|---|---|---|---|---|---|
| 1525 | 1580 | 1683 | 1709 | 1759 | 1815 | 1856 | 1909 | 1950 | 1985 | 2042 | 12069 |

| Torque value at which bending is performed in a horizontal direction (N•m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the electrical connection framework 4 produces abnormal sound | | | | | | | | | | | |
|---|---|---|---|---|---|---|---|---|---|---|---|
| YES | YES | NO | NO | NO | NO | NO | NO | NO | NO | NO | NO |

As can be seen from Table 1 above, when the tensile strength of the electrical connection framework 4 is less than or equal to 75 MPa, the tensile value when the electrical connection framework 4 is pulled broken is less than 1600 N, at this time, the strength of the electrical connection framework 4 itself is not high, thus the electrical connection framework 4 is pulled broken when a small external force is applied thereto, resulting in function failure of the electrical connection framework 4, and thus the purpose of electric energy transmission cannot be achieved. When the tensile strength of the electrical connection framework 4 is greater than 480 MPa, the torque value when the electrical connection framework 4 is bent at 90° is greater than 60 N•m, at this time the torque value does not meet the requirements of the qualified value. When the torque value is greater than 60 N•m, the electrical connection framework 4 is not easily bent. Therefore, the inventor sets the torque value to be less than 60 N•m as the qualified value. On the other hand, because the larger the tensile strength of the electrical connection framework 4 is, the less easily the electrical connection framework 4 deforms, so in the vibration test process, the less easily the electrical connection framework 4 produces abnormal sound relative to vibration of the connectors connected at both ends. On the contrary, the smaller the tensile strength of the electrical connection framework 4 is, the more easily the electrical connection framework 4 deforms, so in the vibration test process, the more easily the electrical connection framework 4 produces abnormal sound relative to vibration of the connectors connected at both ends. As can be seen from Table 1 above, when the tensile strength of the electrical connection framework 4 is less than or equal to 75 MPa, the electrical connection framework 4 may produce abnormal sound during the vibration test. Therefore, the inventor sets the tensile strength of the electrical connection framework 4 to be 75 MPa to 480 MPa. When the tensile strength of the electrical connection framework 4 is in the range of 180 MPa to 330 MPa, the torque value at which the electrical connection framework 4 is bent in the horizontal direction is less than 50 N•m, so the electrical connection framework 4 is relatively easily bent. At the same time, because the tensile strength of the electrical connection framework 4 is relatively large, the less easily it produces abnormal sound. Therefore, the inventor preferably selects the tensile strength of the electrical connection framework 4 to be in the range of 180 MPa to 330 MPa.

In some embodiments, the plug-in portion 1 and the support portion 2 are cylindrical, and the plug-in portion 1 and the support portion 2 are connected by means of plug-in connection, lap joint, abutting connection or screw connection. As shown in FIG. 1, in this embodiment, the plug-in portion 1 and the support portion 2 are both cylindrical and are connected together by means of plug-in connection, lap joint, abutting connection or screw connection. The connection terminal 3 and the electrical connection framework 4 are placed in the internal space of the plug-in portion 1 and the support portion 2, and the connection position of the connection terminal 3 and the electrical connection framework 4 is located in the supporting cavity.

In some embodiments, the plug-in portion 1 has a first end 12 at the connection part with the support portion 2, and the first end 12 has a first through hole 13 passing through the connection terminal 3, the support portion 2 is cylindrical, and the plug-in portion 1 and the support portion 2 are connected by means of plug-in connection, lap j oint, abutting connection or screw connection. As shown in FIG. 2, in this embodiment, the plug-in portion 1 and the support portion 2 are connected by means of abutting connection, the support portion 2 is cylindrical, the plug-in portion 1 has a first end 12 at the connection part with the support portion 2, and the first end 12 is provided with a first through hole 13, and the connection terminal 3 passes through the first through hole 13 to realize that part of the connection terminal 3 is located in the plug-in cavity 11.

In some embodiments, the outer diameter of the first through hole 13 is greater than the outer diameter of the connection terminal 3, and the sealing portion 5 fills the gap between the first through hole 13 and the connection terminal 3. In this embodiment, to enable the connection terminal 3 to pass through the first through hole 13, the outer diameter of the first through hole 13 is set to be larger than the outer diameter of connection terminal 3. There is a gap between the first through hole 13 and the connection terminal 3 to facilitate the filling of the sealing portion 5, and the sealing portion 5 is also filled between the connection terminal 3 and the first through hole 13 to ensure the sealing performance of the first through hole 13.

In some embodiments, the plug-in portion 1 is cylindrical, the support portion 2 has a second end 21 at the connection part with the plug-in portion 2, the second end 21 has a second through hole 22 passing through the connection terminal 3, and the plug-in portion 1 and the support portion 2 are connected by means of plug-in connection, lap j oint, abutting connection or screw connection. As shown in FIG. 3, in this embodiment, the plug-in portion 1 and the support portion 2 are connected by means of plug-in connection, the plug-in portion 1 is cylindrical, the support portion 2 has a second end 21 at the connection part with the plug-in portion 1, and the second end 21 is provided with a second through hole 22, and the connection terminal 3 passes through the second through hole 22 to realize that part of the connection terminal 3 is located in the plug-in cavity 11.

In some embodiments, the outer diameter of the second through hole 22 is greater than the outer diameter of the connection terminal 3, and the sealing portion 5 fills the gap between the second through hole 22 and the connection terminal 3. To enable the connection terminal 3 to pass through the second through hole 22, the outer diameter of the second through hole 22 is set to be larger than the outer diameter of connection terminal 3. There is a gap between the second through hole 22 and the connection terminal 3 to facilitate the filling of the sealing portion 5, and the sealing portion 5 is filled between the connection terminal 3 and the second through hole 22 to ensure the sealing performance of the second through hole 22.

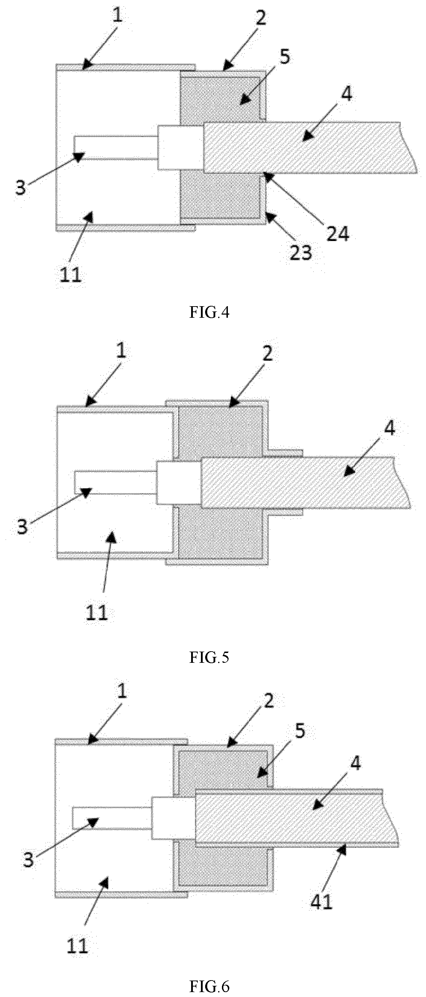

In some embodiments, the support portion 2 has a third end 23 at a position away from the plug-in portion 1, and the third end 23 has a third through hole 24 passing through the electrical connection framework 4. As shown in FIG. 4, the plug-in portion 1 and the support portion 2 are connected by means of screw connection. The support portion 2 is not a cylindrical structure with two ends open, has a third end 23 at an end thereof away from the plug-in portion 1, and is provided with a third through hole 24 on the third end 23, such that the electrical connection framework 4 is arranged in the supporting cavity. In the embodiment of FIG. 5, the plug-in portion 1 and the support portion 2 are connected by means of lap j oint, the plug-in portion 1 has a first end 12 and a first through hole 13, the support portion 2 has a third end 23 and a third through hole 24, and the third through hole 24 extends outwards by a predetermined length, wrapping part of the electrical connection framework 4.

In some embodiments, the electrical connection framework is in interference connection with the third through hole. Interference fit can further prevent water or dust from entering the supporting cavity to achieve a better sealing effect. At the same time, the electrical connection framework and the plug-in portion can be connected more tightly, which can avoid relative movement between the electrical connection framework and the third through hole, so as to prevent repeated friction from damaging a plating layer or an insulation layer on the surface of the electrical connection framework. In specific implementation, the third through hole can be provided with an elastic wrap, and the cross section of the third through hole with the elastic wrap is less than the diameter of the electrical connection framework and can accommodate the electrical connection framework to pass, so as to form the interference fit between the electrical connection framework and the third through hole.

In some embodiments, the outer diameter of the third through hole 24 is greater than the outer diameter of the electrical connection framework 4, and the sealing portion 5 fills the gap between the third through hole 24 and the electrical connection framework 4. To enable the electrical connection framework 4 to pass through the third through hole 24, the outer diameter of the third through hole 24 is set to be larger than the outer diameter of the electrical connection framework 4. There is a gap between the third through hole 24 and the electrical connection framework 4 to facilitate the filling of the sealing portion 5, and the sealing portion 5 is filled between the electrical connection framework 4 and the third through hole 24 to ensure the sealing performance of the third through hole 24.

In some embodiments, the sealing portion 5 fills at least the inside of the supporting cavity and wraps part of the electrical connection framework 4 and part of the connection terminal 3 as well as the connection part of the electrical connection framework 4 with the connection terminal 3. The supporting cavity structure is arranged inside the support portion 2 to reduce the weight of the support portion 2, such that the overall weight of the connector assembly is reduced. The sealing portion 5 is filled in the inside of the supporting cavity, to wrap the connection part of the electrical connection framework 4 and the connection terminal 3, so as to achieve the effect of waterproof sealing.

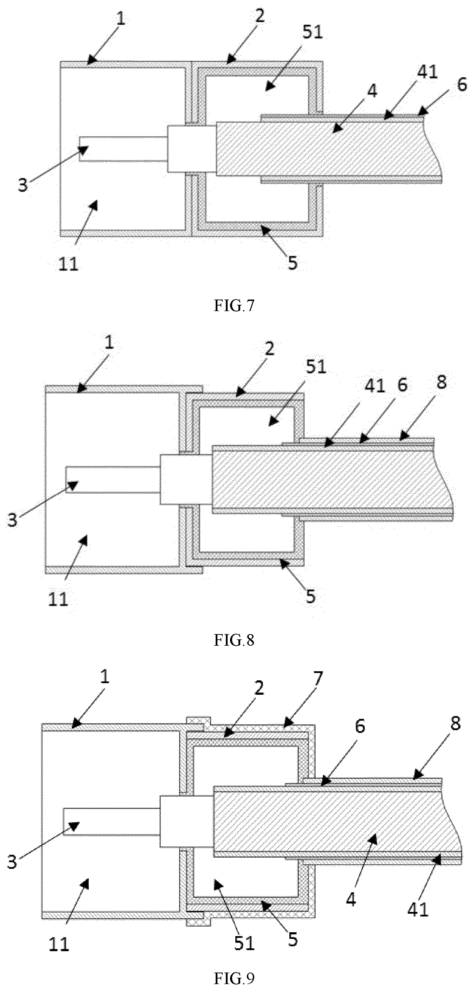

In some embodiments, the sealing portion 5 has an installation cavity 51 inside, at least part of the outer wall of the sealing portion 5 is connected to the inner wall of the support portion 2, and part of the electrical connection framework 4, part of the connection terminal 3, and the connection part of the electrical connection framework 4 with the connection terminal 3 is located in the installation cavity 51. As shown in FIGs. 7 to 9, the sealing portion 5 can also have an installation cavity 51 inside, part of the electrical connection framework 4 and part of the connection terminal 3 are both placed in the installation cavity 51, and the connection part of the electrical connection framework 4 and connection terminal 3 is also located in the installation cavity 51, not only to meet the requirements of waterproof sealing, but also to save material of the sealing portion 5, and also avoid excessive weight of the entire connector assembly.

In some embodiments, an insulation layer 41 sleeves on the periphery of the electrical connection framework 4, and at least part of the insulation layer 41 is connected to the sealing portion 5. As shown in FIGs. 6 to 9, an insulation layer 41 sleeves on the periphery of the electrical connection framework 4, and part of the insulation layer 41 is connected to the sealing portion 5, which plays an insulation role on the electrical connection framework 4 and prevents the possible short circuit between the electrical connection framework 4 and the vehicle body.

In some embodiments, the electrical connection framework 4 has at least one bending portion, and in at least part of the bending portion, at least one cavity 42 is arranged between the inner wall of the insulation layer 41 and the periphery of the electrical connection framework 4.

In the design process of the electric energy transmission system, the cross-sectional area of the electrical connection framework 4 is carefully calculated according to the conduction current, and there will be sufficient margin. Even if the conducted current of the electrical connection framework 4 exceeds the rated current due to voltage instability and other reasons, the electrical connection framework 4 may only cause heat, but may not cause the electrical connection framework 4 to be fused or burned. However, the insulation layer 41 covering outside the electrical connection framework 4 is a plastic material, and is melted at temperature between 115 °C and 120 °C. In addition, when the electrical connection framework 4 is installed, the insulation layer 41 needs to be covered with objects with a low melting point such as tape, sponge and the like, which may be melted at a temperature of 100 °C or lower. Therefore, when the electrical connection framework 4 has excessive current and the temperature thereof rises beyond the standard, the insulation layer 41 or materials such as tape or sponge on the periphery of the electrical connection framework 4 are exactly the items that need to be protected from being melted or burned.

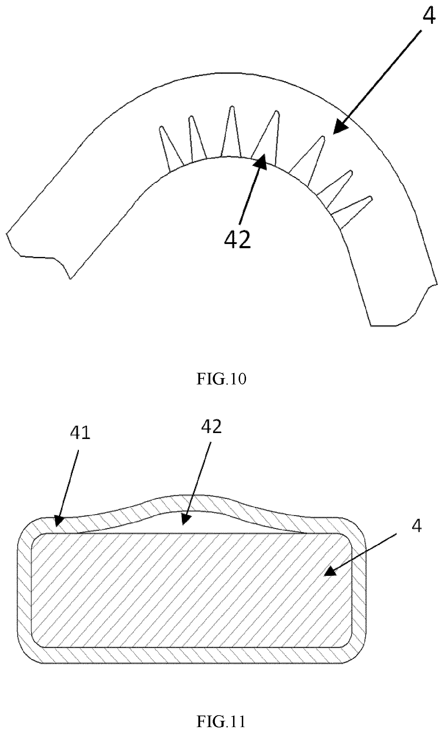

As shown in FIGs. 10 to 11, there is a cavity 42 between the bending portion of the electrical connection framework 4 and the inner wall of the insulation layer 41. There is air in the cavity 42, and the sealed air has poor thermal conductivity. Therefore, when the bending portion of the electrical connection framework 4 generates a large amount of heat, the insulation layer 41 outside the cavity 42 may not be affected, so as to protect the insulation layer 41 of the bending portion from being softened or melted.

Because the cavity 42 has sealed air inside which plays the role of heat insulation, the heat of the bending portion of the electrical connection framework 4 cannot be transferred to the outside of the insulation layer 41, so that the objects with a low melting point such as tape, sponge and the like that cover the insulation layer 41 will not be heated and melted, thereby reducing the probability of accidents.

The sealed air in the cavity 42 may expand when the bending portion of the electrical connection framework 4 generates heat, but due to the existence of the insulation layer 41, the pressure in the cavity 42 will gradually increase. According to Paschen's law, the higher the air pressure is, the higher the breakdown voltage is, so the resistance to voltage breakdown of the bending portion may be improved, and the safety of the electric energy transmission system may be improved.

In some embodiments, a shielding layer 6 sleeves on the periphery of the insulation layer 41, and the shielding layer is one or combination of a metal and composite material thereof having a shielding effect, plastic having a shielding effect or rubber having a shielding effect or textile having a shielding effect. As shown in FIGs. 7 to 9, the shielding layer 6 sleeves on the periphery of the insulation layer 41, and the shielding layer 6 has a shielding effect on the electrical connection framework 4.

Further, the material of the support portion 2 contains a conductive metal or electrically conductive plastics, the support portion 2 is electrically connected to the shielding layer 6, the material of the sealing portion 5 contains an insulating material, part of the sealing portion 5 is arranged on one or both sides of the connection part of the support portion 2 and the shielding layer 6, and the connection part of the support portion 2 and the shielding layer 6 is sealed. The electrically conductive plastics is conductive plastic or conductive rubber containing metal particles. The advantage of using the electrically conductive plastics is that it can facilitate injection molding, and the user can select the support portion of the appropriate material according to the need.

Further, the sealing portion 5 has an installation cavity 51 inside, at least part of the outer wall of the sealing portion 5 is connected to the inner wall of the support portion 2, the sealing portion 5 is insulated with the electrical connection framework 4 and part of the connection terminal 3, the material of the sealing portion 5 contains electrically conductive plastics, and the sealing portion 5 is electrically connected to the shielding layer 6.

In some embodiments, the electrically conductive plastics has a transfer impedance of less than 100 mΩ. The shielding material usually uses the transfer impedance to characterize the shielding effect of the protection shell 7, and the smaller the transfer impedance is, the better the shielding effect is. The transfer impedance of the protection shell 7 is defined as the ratio of the differential mode voltage U induced by the shield per unit length to the current Is passing through the shield surface, i.e.,

ZT=U/IS, so that it can be understood that the transfer impedance of the protection shell 7 converts the current of the protection shell 7 into differential mode interference. The smaller the transfer impedance is, the better it is. That is, better shielding performance can be obtained by reducing the differential mode interference conversion.

In order to verify the influence of the protection shell 7 having different transfer impedance values on the shielding effect, the inventor uses the electrical connection framework 4, the connector and the connection terminal 3 of the same specification, and uses the protection shell 7 having different transfer impedance values to make a series of samples to respectively test the shielding effect, and the experimental results are shown in Table 2 below. In this embodiment, the shielding performance value greater than 40 dB is the ideal value.

The test method of the shielding performance value is to use test instrument to output a signal value (this value is the test value 2) to the electrical connection framework 4, and to provide a detection device outside the electrical connection framework 4, and the detection device detects a signal value (this value is the test value 1). Shielding performance value = test value 2 - test value 1.

**Table 2: Influence of transfer impedance of the protection shell 7 on the shielding performance**

| | | | | | | | | | | | |
|---|---|---|---|---|---|---|---|---|---|---|---|
| Measuring parameter | Transfer impedance of the protection shell 7 (mΩ) | | | | | | | | | | |
| | 20 | 30 | 40 | 50 | 60 | 70 | 80 | 90 | 100 | 110 | 120 |
| Shielding performance value (dB) | 79 | 76 | 71 | 67 | 63 | 58 | 53 | 46 | 43 | 30 | 26 |

As can be seen from Table 2 above, when the transfer impedance value of the protection shell 7 is greater than 100 mΩ, the shielding performance value of the protection shell 7 is less than 40 dB, which does not meet the requirements of the ideal value; and when the transfer impedance value of the protection shell 7 is less than 100 mω, the shielding performance values of the protection shell 7 all meet the requirement of the ideal value, and the trend is getting better and better, therefore, the inventor sets the transfer impedance of the protection shell 7 to be less than 100 mS2.

In some embodiments, a sheath layer 8 sleeves on the periphery of the shielding layer 6. As shown in FIG. 8 and FIG. 9, a sheath layer 8 further sleeves on the periphery of the shielding layer 6 of the electrical connection framework 4 to further protect the electrical connection framework 4 and prevent the shielding layer 6 from being scratched and thus reducing the shielding effect.

In some embodiments, the material of the sealing portion 5 contains an elastic material. The sealing portion 5 is made of an elastic material, which can better cover the connection terminal 3 and the electrical connection framework 4 to improve the sealing effect.

In some embodiments, the sealing portion 5 is arranged in the supporting cavity by injection molding, extrusion molding or glue filling.

In some embodiments, a protection shell is provided at least on the periphery of the support portion 2, and the protection shell encloses the support portion 2 and part of the electrical connection framework 4. As shown in FIG. 9, the protection shell arranged on the periphery of the support portion 2 can wrap the support portion 2 and part of the electrical connection framework 4 inside, and the protection shell can protect the exposed electrical connection framework 4 of the support portion 2 and the connected part.

In some embodiments, the protection shell is made of an elastic material. The protection shell made of an elastic material can better cover outside the support portion 2 and the electrical connection framework 4 connected thereto, and improve the protection effect on the support portion 2 and the electrical connection framework 4.

The present disclosure further provides a charging socket including the connector assembly described above.

The present disclosure further provides a vehicle including the connector assembly as described above.

Those skilled in the art should understand that the above is only the specific embodiment of the present disclosure, but the protection scope of the present disclosure is not limited to this. Obviously, those skilled in the art may make various changes and modifications of the present disclosure without deviating from the spirit and scope of the present disclosure. Thus, if the various equivalent changes or modifications of the present disclosure are made within the scope of the disclosure and the equivalent technology, the present disclosure intends to include the equivalent changes or modifications.

## Claims

1. A connector assembly, comprising a plug-in portion, a support portion, a connection terminal and an electrical connection framework, wherein, the plug-in portion is connected to the support portion, and the electrical connection framework is electrically connected to the connection terminal; the plug-in portion is provided therein with a plug-in cavity, and the connection terminal is at least partially located in the plug-in cavity; the support portion is provided therein with a supporting cavity, and connection portions of the electrical connection framework and the connection terminal are located in the supporting cavity; at least a sealing portion is further arranged in the supporting cavity, and the sealing portion seals the supporting cavity.

2. The connector assembly according to claim 1, wherein the support portion and the sealing portion are formed integrally.

3. The connector assembly according to claim 1, wherein the support portion and the plug-in portion are formed integrally.

4. The connector assembly according to claim 1, wherein the wall thickness of the support portion is inconsistent with the wall thickness of the plug-in portion.

5. The connector assembly according to claim 1, wherein part of the electrical connection framework is flexible.

6. The connector assembly according to claim 1, wherein the electrical connection framework includes at least one bending portion.

7. The connector assembly according to claim 1, wherein the electrical connection framework has a cross section in the shape of one or several of circular, oval, rectangular, polygonal, A-shaped, B-shaped, D-shaped, M-shaped, N-shaped, O-shaped, P-shaped, S-shaped, E-shaped, F-shaped, H-shaped, K-shaped, L-shaped, T-shaped, U-shaped, V-shaped, W-shaped, X-shaped, Y-shaped, Z-shaped, semi-arc, arc, and waved shape.

8. The connector assembly according to claim 1, wherein the cross-section shape of the electrical connection framework is polygon, and the corners of the polygon are all chamfered or rounded.

9. The connector assembly according to claim 1, wherein the electrical connection framework has a cross-sectional area of 3.5 mm² to 240 mm².

10. The connector assembly according to claim 1, wherein the material of the connection terminal contains copper or copper alloy, the material of the electrical connection framework contains aluminum or aluminum alloy, and the electrical connection framework is electrically connected to the connection terminal by welding or crimping.

11. The connector assembly according to claim 1, wherein the electrical connection framework is a rigid body and the tensile strength of the electrical connection framework is greater than 75 MPa.

12. The connector assembly according to claim 1, wherein the plug-in portion and the support portion are cylindrical, and the plug-in portion and the support portion are connected by means of plug-in connection, lap j oint, abutting connection or screw connection.

13. The connector assembly according to claim 1, wherein the plug-in portion has a first end at a connection part with the support portion 2, and the first end has a first through hole passing through the connection terminal, the support portion is cylindrical, and the plug-in portion and the support portion are connected by means of plug-in connection, lap j oint, abutting connection or screw connection.

14. The connector assembly according to claim 13, wherein an outer diameter of the first through hole is greater than an outer diameter of the connection terminal, and the sealing portion fills a gap between the first through hole and the connection terminal.

15. The connector assembly according to claim 1, wherein the plug-in portion is cylindrical, the support portion has a second end at a connection part with the plug-in portion, the second end has a second through hole passing through the connection terminal, and the plug-in portion and the support portion are connected by means of plug-in connection, lap joint, abutting connection or screw connection.

16. The connector assembly according to claim 15, wherein an outer diameter of the second through hole is greater than an outer diameter of the connection terminal, and the sealing portion fills a gap between the second through hole and the connection terminal.

17. The connector assembly according to claim 1, wherein the support portion has a third end at a position away from the plug-in portion, and the third end has a third through hole passing through the electrical connection framework.

18. The connector assembly according to claim 17, wherein the electrical connection framework is in interference connection with the third through hole.

19. The connector assembly according to claim 17, wherein an outer diameter of the third through hole is greater than an outer diameter of the electrical connection framework, and the sealing portion fills the gap between the third through hole and the electrical connection framework.

20. The connector assembly according to claim 1, wherein the sealing portion fills at least the inside of the supporting cavity and wraps part of the electrical connection framework and part of the connection terminal as well as the connection part of the electrical connection framework with the connection terminal.

21. The connector assembly according to claim 1, wherein the sealing portion has an installation cavity inside, at least part of an outer wall of the sealing portion is connected to an inner wall of the support portion, and part of the electrical connection framework, part of the connection terminal, and the connection part of the electrical connection framework with the connection terminal is located in the installation cavity.

22. The connector assembly according to claim 1, wherein an insulation layer sleeves on the periphery of the electrical connection framework, and at least part of the insulation layer is connected to the sealing portion.

23. The connector assembly according to claim 22, wherein a shielding layer sleeves on the periphery of the insulation layer, and the shielding layer is one or combination of a metal and composite material thereof having a shielding effect, plastic having a shielding effect or rubber having a shielding effect or textile having a shielding effect.

24. The connector assembly according to claim 23, wherein the material of the support portion contains a conductive metal or electrically conductive plastics, the support portion is electrically connected to the shielding layer, the material of the sealing portion contains an insulating material, part of the sealing portion is arranged on one or both sides of the connection part of the support portion and the shielding layer, and the connection part of the support portion and the shielding layer is sealed.

25. The connector assembly according to claim 23, wherein the sealing portion has an installation cavity inside, at least part of the outer wall of the sealing portion is connected to the inner wall of the support portion, the sealing portion is insulated with the electrical connection framework and part of the connection terminal, the material of the sealing portion contains electrically conductive plastics, and the sealing portion is electrically connected to the shielding layer.

26. The connector assembly according to claim 24 or 25, wherein the electrically conductive plastics has a transfer impedance of less than 100 mQ.

27. The connector assembly according to claim 24, wherein a sheath layer sleeves on the periphery of the shielding layer.

28. The connector assembly according to claim 1, wherein the material of the sealing portion contains an elastic material.

29. The connector assembly according to claim 1, wherein the sealing portion is arranged in the supporting cavity by injection molding, extrusion molding or glue filling.

30. The connector assembly according to claim 1, wherein a protection shell is provided at least on the periphery of the support portion, and the protection shell encloses the support portion and part of the electrical connection framework.

31. The connector assembly according to claim 30, wherein the protection shell is made of an elastic material.

32. A charging socket wherein comprising a connector assembly according to any of claims 1 to 31.

33. A vehicle wherein comprising a connector assembly according to any of claims 1 to 31.
